# DEMANDE DE BREVET EUROPEEN

(11) **EP 2 511 197 A1**
(43) Date de publication de la demande: **17.10.2012**
(21) Numéro de dépôt: 12305430.6
(22) Date de dépôt: 12.04.2012
(51) Int. Cl.: B65F 3/00

(54) **Méthode de collecte de papiers récupérés**

(30) Priorité: 13.04.2011 FR 1101135
(71) Demandeur: SA des Magasins Généraux d'Epinal - MGE Transports et Auxiliaires, 88150 Chavelot (FR)
(72) Inventeur: Virtel, Philippe, 88000 EPINAL (FR)
(74) Mandataire: Poupon, Michel

(57) **Abrégé**

La présente invention concerne une méthode de collecte de déchets papier en vue de leur recyclage comme matière première dans une usine de fabrication de papier, comprenant les étapes suivantes: mise à disposition d'une caisse mobile (1) en un lieu de collecte en vue de son remplissage, transport de ladite caisse mobile (1) jusqu'à ladite usine, déchargement des déchets papier, chargement de ladite caisse mobile (1) en papier neuf, transport de ladite caisse mobile (1) jusqu'à un lieu de livraison dudit papier neuf, déchargement du papier neuf, et transport de ladite caisse mobile (1) vers un lieu de collecte.

## Description

La présente invention concerne une méthode de collecte de déchets papier.

Plus particulièrement, elle porte sur une méthode de collecte de déchets papier de diverses origines pour les utiliser comme matière première de fabrication de papier.

L'industrie du papier consomme beaucoup de bois comme matière première. Par souci écologique, cette industrie utilise de plus en plus de déchets papier, qui sont recyclés pour la fabrication de papier neuf. On utilise aussi les termes de « papier récupéré » pour désigner le papier recyclable dans la fabrication de nouveau papier. Dans la suite on utilisera l'expression « déchets papier » pour décrire ce papier recyclable.

Une des difficultés pour recycler le papier consiste en la collecte des déchets, la difficulté venant du fait que les sources de déchets papier sont extrêmement variées et réparties sur le territoire, jusque chez les particuliers.

Le document EP1 410 947 décrit un véhicule capable d'effectuer la livraison de bobines de papier neuf à une imprimerie, le même véhicule étant capable de recueillir les déchets papier de cette imprimerie, et de les transporter jusqu'à l'usine de fabrication du papier pour y être recyclés comme matière première de papier.

Néanmoins cela présente d'importants inconvénients, puisque non seulement cela nécessite la mise à disposition de l'opération de véhicules complets, mais en plus la solution se limite à la collecte de déchets produits dans une imprimerie.

La présente invention a pour but de pallier au moins en partie ces inconvénients, et de proposer une méthode de collecte de déchets papier qui soit plus économique.

Un autre objet de la présente invention est de proposer une méthode de collecte de déchets papier capable de collecter des déchets papier d'une variété de sources et d'une variété de localisations.

A cet effet elle propose une méthode de collecte de déchets papier en vue de leur recyclage comme matière première dans une usine de fabrication de papier. Le dispositif est particulier en ce qu'il comprend les étapes suivantes :
- mise à disposition d'une caisse mobile en un lieu de collecte en vue de son remplissage
- transport de ladite caisse mobile jusqu'à ladite usine
- déchargement des déchets papier
- chargement de ladite caisse mobile en papier neuf
- transport de ladite caisse mobile jusqu'à un lieu de livraison dudit papier neuf
- déchargement du papier neuf
- transport de ladite caisse mobile vers un lieu de collecte.

Grâce à ces dispositions, seule une caisse mobile est immobilisée pour la collecte des déchets, et non pas un camion complet. Par ailleurs, le mode de transport, par route, fer ou fluvial peut être choisi pour chaque transport selon les opportunités ou les possibilités. Cela donne accès à une plus grande souplesse d'utilisation des moyens de transports, notamment les plus écologiques.

Selon d'autres caractéristiques
- ladite caisse mobile peut être équipée d'un fond mouvant alternatif ; cette technique permet de décharger la caisse mobile sans nécessité d'une machine imposante de type basculeur de conteneur, et en évitant également les risques d'accident liés à ce type d'équipement,
- ladite caisse mobile peut être conçue apte à être transportée indifféremment par un camion, ou un wagon de chemin de fer ; on privilégie alors le volume utile; elle peut aussi être conçue apte en plus à être transportée par un véhicule de transport fluvial ou maritime, quitte à réduire un peu le volume utile; cela permet d'optimiser à tout moment les types de transport, et même d'utiliser un autre type de transport lors des différentes phases d'un même trajet de la caisse mobile,
- le lieu de collecte pour une caisse mobile peut être choisi selon sa localisation géographique par rapport au lieu de livraison et selon les circuits d'autres caisses mobiles; cela permet d'optimiser les temps et les coûts de transport, et en conséquence aussi les émissions de gaz nocifs.

La présente invention sera mieux comprise à la lecture de la description détaillée qui suit faite en référence aux figures annexées dans lesquelles
- la figure 1 représente une vue en perspective d'une caisse mobile pour mettre en oeuvre la méthode selon l'invention,
- la figure 2 représente une vue de côté de la caisse mobile de la fig. 1 en cours de manutention,
- la figures 3 représente en vue de côté trois moyens de transport de la caisse mobile de la fig. 1,

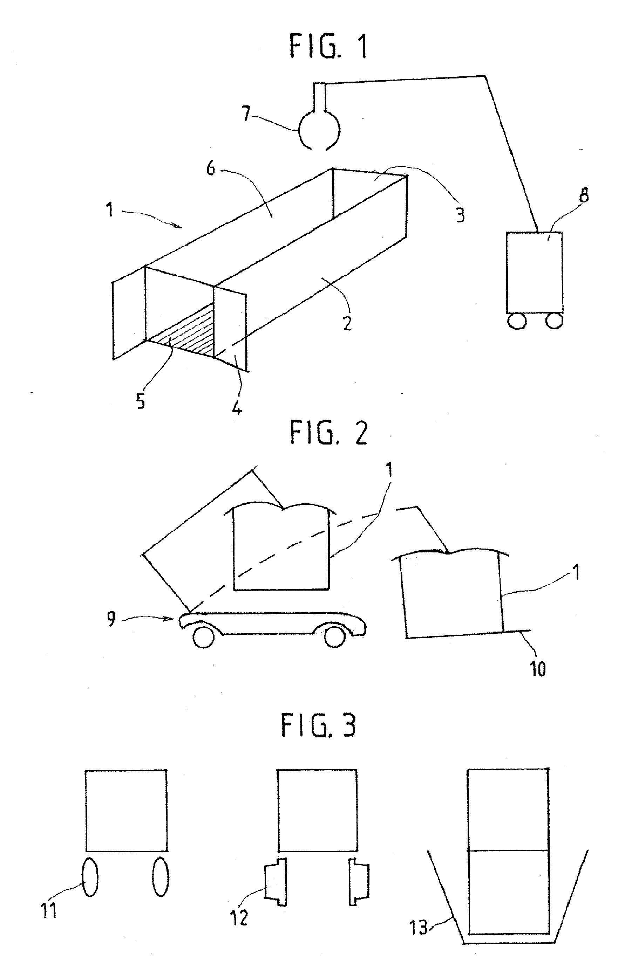

Tel que visible à la fig. 1, la méthode selon l'invention met en oeuvre une caisse mobile 1 comportant des parois latérales 2, une face avant 3, des portes arrière 4 et un fond mouvant alternatif 5. Elle comprend également un dessus 6 amovible, la caisse mobile étant du type « open top », chargeable par le dessus.

Dans la phase de mise à disposition de la caisse mobile 1 sur un lieu de collecte, les portes arrière 4 sont fermées, la dessus 6 est déposé, et le chargement de la caisse mobile 1 se fait par un grappin 7 manipulé par une grue mobile 8. Le grappin 7 prend les déchets rassemblés dans un lieu prévu à cet effet, et en remplit la caisse mobile 1 par le dessus.

Quand la caisse mobile 1 est pleine, le dessus 6 est mis en place, une grue porte conteneur 9 (voir fig. 2), peut être utilisée pour mettre en place la caisse mobile 1 sur un porteur 10. Néanmoins une telle grue n'est généralement pas disponible dans les déchetteries de type municipal, et il est donc préférable de prévoir que la caisse mobile reste sur un châssis de camion pour pouvoir être rechargée plus facilement sur un porteur.

Ce porteur peut être un camion 11 porte conteneur, ou un wagon de chemin de fer 12 porte conteneur, ou une péniche 13, selon l'accessibilité des divers moyens de transport. La caisse mobile 1 peut aussi être conçue pour être transportée par camion 11 ou wagon de chemin de fer 12, mais pas par péniche. On privilégie alors le volume utile en faisant l'impasse sur la possibilité de transport par péniche.

Une fois arrivée à l'usine de fabrication de papier, la caisse mobile 1 est positionnée sur un poste de déchargement disposant de sa propre grue porte conteneur 9. Les portes arrière 4 sont alors ouvertes, et le fond mouvant alternatif 5 est mis en marche pour vider la caisse mobile 1 par l'arrière dans un réceptacle, duquel les déchets papier sont convoyés vers les chaines de fabrication de l'usine.

La motorisation du fond mouvant alternatif 5 peut être prévu sur la caisse mobile 1 spécialement prévue pour actionner le fond mouvant 5 de cette caisse mobile 1, mais peut aussi se trouver au poste de déchargement, apte à actionner tous les fonds mouvants des caisses mobiles 1 devant y être déchargées.

On peut par ailleurs prévoir tout autre type de conteneur 1 et de moyen de déchargement, y compris des bennes basculantes par l'arrière ou par le côté. Néanmoins de tels systèmes présentent des risques pour les opérateurs, liés aux chutes possibles de tels engins, ce qui pousse à préférer des systèmes à fond mouvant. Des systèmes de fond mouvant à chaîne et racleur peuvent également convenir.

Lorsque la caisse mobile 1 est vide, elle est chargée avec des rouleaux de papier neuf. Ceci peut se faire au même endroit, au poste de déchargement des déchets papier, ce qui permet d'éviter un déplacement complémentaire de la caisse mobile 1. Mais on peut aussi déplacer la caisse mobile 1 vers un poste de chargement situé ailleurs dans l'usine. L'homme du métier est tout à fait capable de sélectionner les solutions les plus économiques pour cela. La caisse mobile avec son châssis est gerbable sur trois niveaux, permettant facilement un stockage intermédiaire de ces caisses avant leur envoi avec des produits neufs.

La caisse mobile 1 est alors chargée sur un porteur 10, qui peut être différent du porteur 10 utilisé lors du transport précédent, pour être transporté jusqu'au lieu de livraison du papier neuf. Ce lieu peut être une imprimerie, un atelier d'un journal, un centre de préparation de papier à usage professionnel ou privé, ou tout autre client possible de ce type de rouleau de papier neuf.

Dans le cas où le client qui reçoit le papier neuf génère lui-même une grande quantité de déchets papier, la caisse mobile 1 peut être utilisée au même endroit pour collecter ces déchets.

Mais dans beaucoup de cas les lieux de livraison du papier neuf, et les lieux de collecte des déchets papier ne sont pas les mêmes. La caisse mobile 1 est alors transportée vers le lieu de collecte le plus adapté. Ce lieu peut être le lieu de collecte le plus proche du lieu de livraison, mais on peut aussi optimiser les coûts en recherchant le lieu le plus adapté en fonction du lieu de livraison, mais également du circuit d'autres caisses mobiles dans la région. Une telle optimisation peut le cas échéant être gérée par un programme d'ordinateur.

Le lieu de collecte sera le plus souvent un centre de tri-valorisation ou un centre de stockage dédié à ce type de collecte.

Une fois la caisse mobile 1 transportée vers le lieu de collecte le plus adapté, on procède comme indiqué ci-dessus, le cycle de la méthode reprend du début.

Bien que l'invention ait été décrite selon un mode de réalisation particulier, elle n'y est nullement limitée, et des variantes peuvent y être apportées, ainsi que des combinaisons des variantes décrites, sans pour autant sortir du cadre de la présente invention.

### Nomenclature :

- 1.: caisse mobile
- 2.: paroi latérale
- 3.: face avant
- 4.: porte arrière
- 5.: fond mouvant alternatif
- 6.: dessus
- 7.: grappin
- 8.: grue porte grappin
- 9.: grue porte conteneur
- 10.: porteur
- 11.: camion
- 12.: wagon de chemin de fer
- 13.: péniche

## Revendications

1. Méthode de collecte de déchets papier en vue de leur recyclage comme matière première dans une usine de fabrication de papier, **caractérisée en ce qu'**elle comprend les étapes suivantes :
- mise à disposition d'une caisse mobile (1) en un lieu de collecte en vue de son remplissage
- transport de ladite caisse mobile (1) jusqu'à ladite usine
- déchargement des déchets papier
- chargement de ladite caisse mobile (1) en papier neuf
- transport de ladite caisse mobile (1) jusqu'à un lieu de livraison dudit papier neuf
- déchargement du papier neuf
- transport de ladite caisse mobile (1) vers un lieu de collecte.

2. Méthode selon la revendication précédente, dans laquelle ladite caisse mobile (1) est équipée d'un fond mouvant alternatif (5).

3. Méthode selon l'une des revendications précédentes, dans laquelle ladite caisse mobile (1) est conçue apte à être transportée indifféremment par un camion (11) ou un wagon de chemin de fer (12).

4. Méthode selon l'une des revendications précédentes, dans laquelle ladite caisse mobile (1) est conçue apte à être transportée indifféremment par un camion (11), un wagon de chemin de fer (12) ou un véhicule de transport fluvial ou maritime (13).

5. Méthode selon l'une des revendications précédentes, dans laquelle le lieu de collecte pour une caisse mobile (1) est différent du lieu de livraison du papier neuf.
